# EUROPÄISCHE PATENTANMELDUNG

(11) **EP 3 147 474 A1**
(43) Veröffentlichungstag der Anmeldung: **29.03.2017**
(21) Anmeldenummer: 16187638.8
(22) Anmeldetag: 07.09.2016
(51) Int. Cl.: F01P 7/16, F16K 11/085

(54) **ELEKTRISCH ANGETRIEBENES VENTIL**

(30) Priorität: 24.09.2015 DE 102015218391
(71) Anmelder: Mahle International GmbH, 70376 Stuttgart (DE)
(72) Erfinder: DIETERICH, Mario, 71540 Murrhardt (DE); HELMRICH, Stefan, 70469 Stuttgart (DE); HILLER, Bert, 71384 Weinstadt (DE); KLEIN, Hans-Peter, 71397 Leutenbach (DE); VÖLLINGER, Jeremia, 71640 Ludwigsburg (DE); ZUREL, Radoslaw, 71686 Remseck (DE)
(74) Vertreter: BRP Renaud & Partner mbB Rechtsanwälte Patentanwälte Steuerberater

(57) **Zusammenfassung**

Die vorliegende Erfindung betrifft ein elektrisch angetriebenes Ventil (1),
- mit einem Gehäuse (4) und einem darin drehbar gelagerten, zylinderförmigen Ventilkörper (5),
- wobei das Gehäuse (4) zumindest einen mantelseitigen Eingang (7) und zumindest einen mantelseitigen Ausgang (8) aufweist,
- wobei der Ventilkörper (5) zumindest eine mantelseitige Öffnung (9) aufweist. Erfindungswesentlich ist dabei,
- dass an einer Innenmantelfläche des Gehäuses (4) eine sich zumindest teilweise um den zumindest einen Eingang (7) und/oder Ausgang (8) herumerstreckende Ausnehmung (10) vorgesehen ist,
- dass zumindest ein Dichtelement (11) mit einem Fuß (12) aus einem ersten Material und einem damit gefügten sattelförmigen Dichtgleitkörper (13) aus einem zweiten Material vorgesehen ist,
- dass das zumindest eine Dichtelement (11) bei montiertem Ventil (1) mit seinem Fuß (12) in die Ausnehmung (10) eingreift und mit seinem Dichtgleitkörper (13) auf dem Ventilkörper (5) gleitet.

## Beschreibung

Die vorliegende Erfindung betrifft ein elektrisch angetriebenes Ventil zur Regelung eines Volumenstroms in einem Heiz- und/oder Kühlsystem eines Kraftfahrzeugs gemäß dem Oberbegriff des Anspruchs 1.

Aus der DE 10 2013 208 193 A1 ist ein gattungsgemäßes elektrisch angetriebenes Ventil mit einem Gehäuse und einem darin drehbar gelagerten Ventilkörper bekannt. Das Gehäuse weist dabei zumindest einen mantelseitigen Eingang und zumindest einen mantelseitigen Ausgang auf, wobei der Ventilkörper zumindest eine mantelseitige Öffnung besitzt, über welche drehwinkelabhängig der zumindest eine Eingang mit dem zumindest einen Ausgang verbindbar oder voneinander absperrbar ist.

Aus der DE 43 24 749 A1 ist ein weiteres Regelventil, umfassend ein Gehäuse mit einer zylinderförmigen Ventilkammer bekannt, wobei die Ventilkammer mit zumindest einem Zulauf und zumindest zwei Abläufen versehen ist. Der Zulauf und die Abläufe sind dabei durch einen gemeinsamen, um eine Achse drehbaren und in der Ventilkammer angeordneten Ventilkörper bedarfsweise zumindest teilweise verschließbar, wobei der Ventilkörper als Drehschieber ausgebildet und von einem Antrieb betätigbar ist. Zusätzlich weist der Ventilkörper eine Erstreckung in Umfangsrichtung der Ventilkammer auf, die jeweils durch eine Kante begrenzt ist, wobei die den Zulauf während seiner Öffnung überfahrende Abströmkante eine sich in axialer Richtung erstreckende, elliptische Einbuchtung aufweist. Hierdurch soll es insbesondere möglich sein, die Betätigungskräfte des Ventilkörpers zum Öffnen des Zulaufs signifikant zu reduzieren.

Nachteilig bei den bekannten Ventilen ist jedoch deren vergleichsweise aufwändige Montage.

Die vorliegende Erfindung beschäftigt sich mit dem Problem, für ein elektrisch angetriebenes Ventil der gattungsgemäßen Art eine verbesserte oder zumindest eine alternative Ausführungsform anzugeben, die sich insbesondere leichter montieren lässt.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht dabei auf dem allgemeinen Gedanken, zumindest ein Dichtelement für einen zylinderförmigen Ventilkörper derart auszubilden, dass dieses einfach in eine entsprechend hierfür vorgesehene Ausnehmung in einem Gehäuse montierbar und anschließend ein zylinderförmiger Körper durch ein einfaches axiales Einschieben in das Gehäuse einsetzbar ist. Das erfindungsgemäße elektrisch angetriebene Ventil dient dabei der Regelung eines Volumenstroms in einem Heiz- und/oder Kühlsystem eines Kraftfahrzeugs und besitzt in bekannter Weise ein Gehäuse sowie den darin drehbar gelagerten, zylinderförmigen Ventilkörper. Das Gehäuse weist dabei zumindest einen mantelseitigen Eingang und zumindest einen mantelseitigen Ausgang auf, wobei der Ventilkörper selbst zumindest eine mantelseitige Öffnung besitzt, über welche drehwinkelabhängig der zumindest eine Eingang mit dem zumindest einen Ausgang verbindbar oder voneinander absperrbar ist. Erfindungsgemäß ist nun an einer Innenmantelfläche des Gehäuses eine sich zumindest teilweise um den zumindest einen Eingang und/oder Ausgang herum erstreckende Ausnehmung (Nut) vorgesehen, wobei das zuvor erwähnte zumindest eine Dichtelement einen Fuß aus einem ersten Material und einen damit gefügten sattelförmigen Dichtgleitkörper aus einem zweiten Material besitzt. Das zumindest eine Dichtelement greift dabei bei montiertem Ventil mit seinem Fuß in die Ausnehmung ein und gleitet mit seinem Dichtgleitkörper auf dem Ventilkörper. Durch das sattelförmige Dichtelement kann einerseits eine zuverlässige Dichtung und andererseits eine vereinfachte Montage erreicht werden, da zunächst lediglich das zumindest eine Dichtelement mit seinem Fuß in die zugehörige Ausnehmung an der Innenmantelfläche des Gehäuses eingesetzt und anschließend der Ventilkörper unter radialem Verdrängen des zumindest einen Dichtelements in Axialrichtung in das Gehäuse eingeschoben werden muss.

Bei einer vorteilhaften Weiterbildung der erfindungsgemäßen Lösung ist der Ventilkörper in dem Gehäuse des Ventils über zumindest ein Gleitlager drehbar gelagert. Mittels eines derartigen Gleitlagers lässt sich eine dauerhaft leichtgängige Lagerung des Ventilkörpers im Gehäuse erreichen.

Bei einer vorteilhaften Weiterbildung der erfindungsgemäßen Lösung weist das Gehäuse zumindest einen ungeregelten Eingang und zumindest einen ungeregelten Ausgang auf. Ein derartiger ungeregelter Eingang bzw. Ausgang kann beispielsweise von einem das eigentliche Ventil umgehenden Bypassstrom genutzt werden und stellt somit beispielsweise eine gewünschte Mindestströmungsmenge stets sicher.

Zweckmäßig weist das erste Material für den Fuß des Dichtelements ein Elastomer, insbesondere Ethylen-Propylen-Dien-Kautschuk (EPDM), hydrierten Acrylnitrilbutadien-Kautschuk (HNBR), Fluorkarbon-Kautschuk (FKM) oder Acrylat-Ethylen-Kautschuk (AEM), auf. AEM-Kautschuk gilt als wärmebeständig. HNBR-Kautschuk zeichnet sich insbesondere durch eine verbesserte Witterungsbeständigkeit sowie durch eine Beständigkeit gegenüber Mineralölen und eine vergleichsweise hohe Temperaturbeständigkeit aus. EPDM-Kautschuk wiederum besitzt ebenfalls eine hohe chemische Beständigkeit sowie eine hohe Elastizität und lässt sich dadurch besonders einfach in die gehäuseseitigen Ausnehmungen einsetzen.

Bei einer weiteren vorteilhaften Ausführungsform der erfindungsgemäßen Lösung weist das zweite Material für den Dichtgleitkörper (PTFE) auf. PTFE-Kunststoffe sind äußerst beständig gegenüber Ölen, aber auch gegenüber Benzin und Alkohol und können in einem hohen Temperaturbereich eingesetzt werden. Aufgrund des sehr geringen Reibungskoeffizienten ermöglicht ein derartiger PTFE-Kunststoff für den Dichtgleitkörper eine leichte Bewegbarkeit des Ventilkörpers.

In einer weiteren vorteilhaften Ausführungsform des erfindungsgemäßen Ventils ist das zumindest eine Dichtelement als 2K-Kunststoffspritzgussteil ausgebildet. Hierdurch ist eine nicht nur qualitativ höchstwertige, sondern zugleich auch eine kostengünstige Herstellung der Dichtelemente möglich.

Zweckmäßig weist der Ventilkörper an einer Stirnseite eine Einführschräge (Fase) auf. Um ein axiales Einschieben und damit eine Montage des Ventils zu erleichtern, dient die beschriebene Einführschräge, welche insbesondere ein Verkanten des Ventilkörpers im Gehäuse bzw. an den darin eingesetzten Dichtelementen zuverlässig verhindert und beim Einschieben mithilft, den Ventilkörper über die Dichtelemente zu schieben und diese radial nach außen zu drücken. Eine derartige Einführschräge kann beispielsweise über ein entsprechend ausgebildetes Kunststoffspritzgusswerkzeug vergleichsweise einfach realisiert werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: ein erfindungsgemäßes elektrisch angetriebenes Ventil zur Regelung zumindest eines Volumenstroms in einem Heiz- und/oder Kühlsystem eines Kraftfahrzeuges in einer Schnittdarstellung,
- Fig. 2: einen erfindungsgemäßen Ventilkörper mit damit zusammenwirkenden Dichtelementen, jedoch ohne Gehäuse,
- Fig. 3: eine Schnittdarstellung durch eine mögliche Ausführungsform eines Dichtelements,
- Fig. 4: eine Schnittdarstellung durch den gemäß der Fig. 2 gezeigten Ventilkörper,
- Fig. 5: den gemäß der Fig. 2 gezeigten Ventilkörper in im Gehäuse eingebauten Zustand,
- Fig. 6: eine Ansicht auf ein erfindungsgemäßes Dichtelement,
- Fig. 7: eine Schnittdarstellung durch das gemäß der Fig. 6 gezeigte Dichtelement,
- Fig. 8: eine Schnittdarstellung durch ein Gehäuse mit eingesetztem Dichtelement ohne eingesetztem Ventilkörper (linke Bildhälfte) und mit eingesetztem Ventilkörper (rechte Bildhälfte),
- Fig. 9: eine Schnittdarstellung durch das erfindungsgemäße Ventil mit vorgeschaltetem Thermostatventil und Bypass.

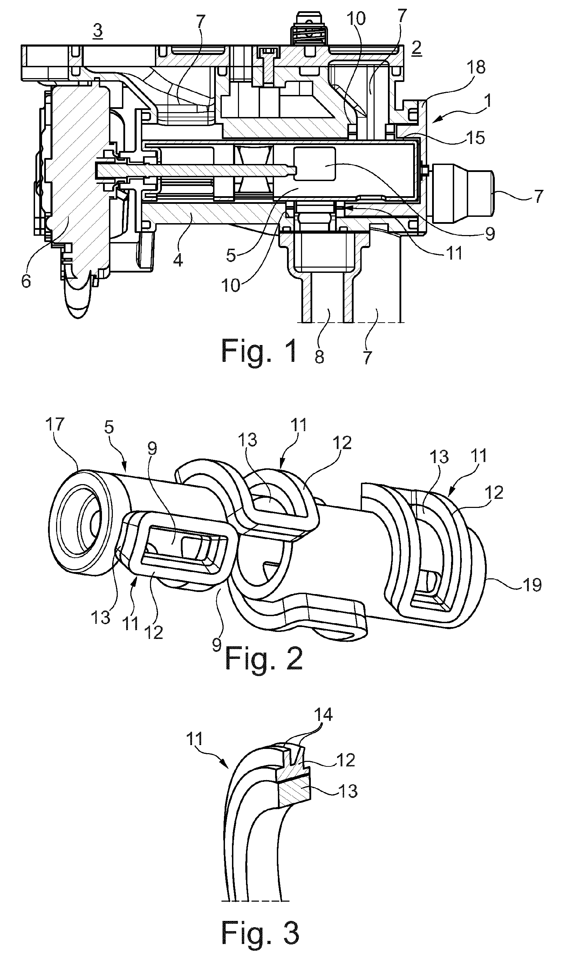

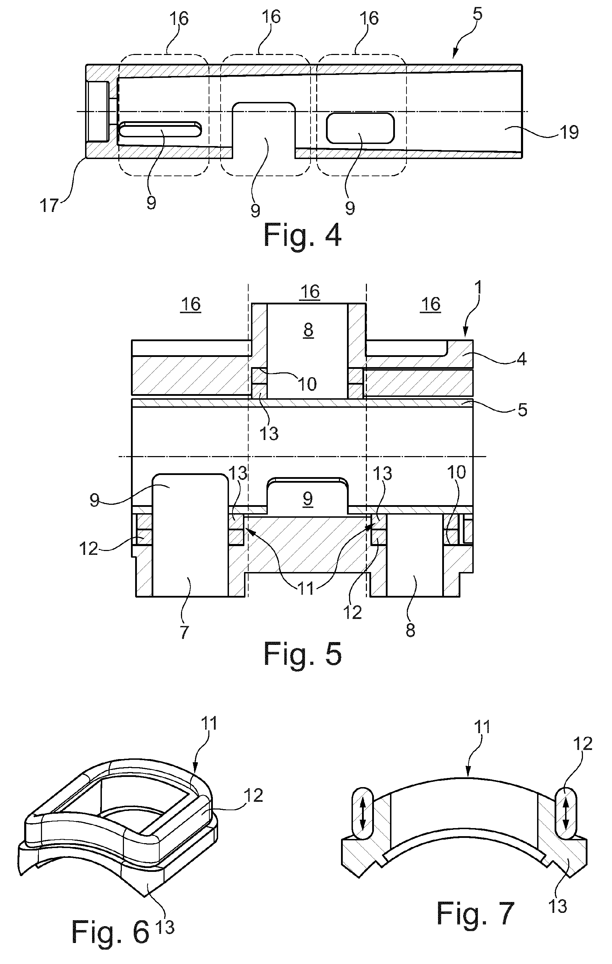

Entsprechend der Fig. 1, weist ein erfindungsgemäßes elektrisch angetriebenes Ventil 1 zur Regelung zumindest eines Volumenstroms in einem Heiz- und/oder Kühlsystem 2 eines Kraftfahrzeuges 3 ein Gehäuse 4 sowie einen darin drehbar gelagerten, zylinderförmigen Ventilkörper 5 auf. Eine Drehbewegung des Ventilkörpers 5 wird dabei mittels einer elektrischen Antriebseinrichtung 6, beispielsweise eines Gleichstrommotors, bewirkt. Mantelseitig besitzt das Gehäuse 4 zumindest einen Eingang 7 und zumindest einen Ausgang 8 (vergleiche auch Fig. 5), wobei selbstverständlich auch mehrere Eingänge 7 und mehrere Ausgänge 8 vorgesehen werden können. Die Eingänge 7 können dabei beispielsweise mit einer Fahrzeugheizung, einem Zylinderkopf der Brennkraftmaschine oder einem Kühler verbunden sein.

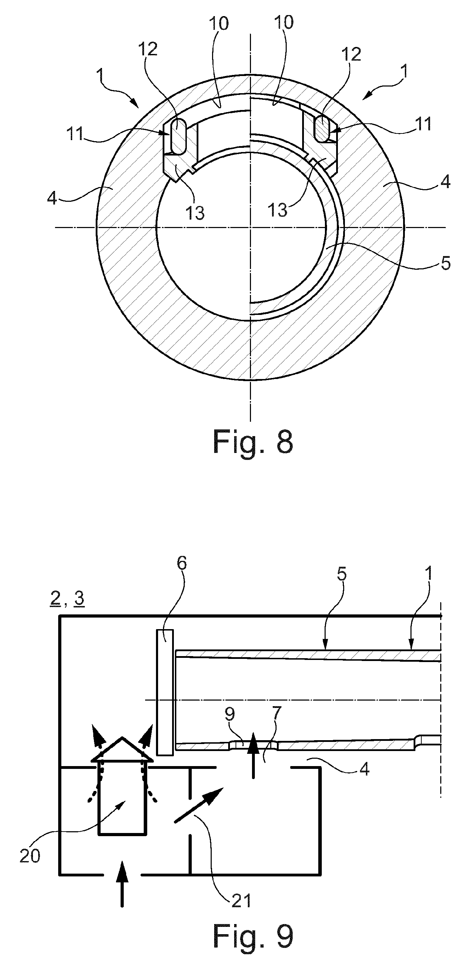

Betrachtet man des Weiteren den Ventilkörper 5, so kann erkennen, dass dieser zumindest eine mantelseitige Öffnung 9, hier mehrere mantelseitige Öffnungen 9, aufweist, über welche drehwinkelabhängig der zumindest eine Eingang 7 mit dem zumindest einen Ausgang 8 verbindbar oder von diesem absperrbar ist. An einer Innenmantelfläche des Gehäuses 4 ist dabei erfindungsgemäß eine sich zumindest teilweise um den zumindest einen Eingang 7 und/oder den zumindest einen Ausgang 8 herum erstreckende Ausnehmung 10, beispielsweise in der Art einer Nut (vergleiche auch die Fig. 5 sowie 8) vorgesehen, ebenso wie zumindest ein Dichtelement 11 (vergleiche auch die Fig. 2, 3 sowie 5 bis 8), welches in montiertem Zustand in die Ausnehmung 10 eingreift. Jedes Dichtelement 11 besitzt dabei einen Fuß 12 aus einem ersten Material und einen damit gefügten, sattelförmigen Dichtgleitkörper 13 aus einem zweiten Material (vergleiche insbesondere auch die Fig. 3 sowie 6 und 7), wobei das Dichtelement 11 bei montiertem Ventil 1 mit seinem Dichtgleitkörper 13 auf dem Ventilkörper 5 gleitet.

Das erste Material für den Fuß 12 des Dichtelements 11 ist dabei ein Elastomer, beispielsweise ein Ethylen-Propylen-Dien-Kautschuk (EPTM), ein hydrierter Acrylnitrilbutadien-Kautschuk (HNBR), ein Fluorkarbon-Kautschuk (FKM) oder ein Acrylat-Ethylen-Kautschuk (AEM). Demgegenüber weist das zweite Material für den Dichtgleitkörper 13 vorzugsweise Polytetrafluorethylen (PTFE) auf, wodurch ein äußerst chemisch- und temperaturbeständiges Material mit einem zudem äußerst geringen Reibungskoeffizienten für den Gleitkontakt auf dem Ventilkörper 5 zur Verfügung steht. Vorzugsweise ist dabei das zumindest eine Dichtelement 11 als 2K-Kunststoffspritzgussteil ausgebildet und dadurch sowohl qualitativ hochwertig als auch kostengünstig herstellbar. Der Fuß 12 des Dichtelements 11 kann dabei als Wulst ausgebildet sein (vergleiche die Fig. 6 und 7) oder aber einzelne Haltelippen 14 (vergleiche Fig. 3) aufweisen, über welche sich das jeweilige Dichtelement 11 in der zugehörigen gehäuseseitigen Ausnehmung 10 verklammert. Hierzu kann beispielsweise die gehäuseseitige Ausnehmung 10 eine Hinterschnittkontur aufweisen.

Betrachtet man nochmals das gemäß der Fig. 1 gezeigte Ventil 1, so kann man erkennen, dass der Ventilkörper 5 in dem Gehäuse 4 über zumindest ein Gleitlager gelagert ist, wodurch ein dauerhaft leichtgängiges Verdrehen des Ventilkörpers 5 und damit ein Schalten des Ventils 1 gewährleistet werden kann. Generell können die Ausgänge 8 sowie die Eingänge 7 als geregelte Ein- bzw. Ausgänge 7, 8 ausgebildet sein, wobei selbstverständlich auch vorgesehen sein kann, dass das Gehäuse 4 auf zumindest einen ungeregelten Eingang 7 und zumindest einen ungeregelten Ausgang 8 aufweisen kann, über welche unabhängig von der Drehwinkelstellung des Ventilkörpers 5 stets ein Fluidstrom in das Gehäuse 4 ein- bzw. austritt.

Betrachtet man das Ventil 1 gemäß der Fig. 5, so kann man erkennen, dass dieses zumindest zwei Segmente 16 jeweils zumindest einen mantelseitigen Eingang 7 und/oder zumindest einem mantelseitigen Ausgang 8 aufweist, wobei der Ventilkörper 5 je Segment 16 zumindest eine mantelseitige Öffnung 9 aufweist, über welche drehwinkelabhängig der zumindest eine Eingang 7 mit dem zumindest einen Ausgang 8 verbindbar oder voneinander absperrbar ist.

Eine Montage des erfindungsgemäßen Ventilkörpers 5 in dem Gehäuse 4 erfolgt dabei wie folgt:
Zunächst werden gemäß der linken Bildhälfte in Fig. 8 sämtliche Dichtelemente 11 derart in die gehäuseseitigen Ausnehmungen 10 eingesetzt, dass diese zumindest mit ihrem Fuß 12 in die Ausnehmung 10 eingreifen. Um dieses zunächst axiale und anschließend radiale Einsetzen des Dichtelements 11 in die zugehörige Ausnehmung 10 zu erleichtern, können auch am Fuß 12 bzw. am Dichtgleitkörper 13 des Dichtelements 11 Einführschrägen vorgesehen sein. Anschließend wird der Ventilkörper 5 in Axialrichtung, das heißt gemäß der linken Bildhälfte in Fig. 8 senkrecht zur Bildebene in das Gehäuse 4 eingeschoben, wodurch die Dichtelemente 11 zumindest teilweise in die zugehörige gehäuseseitige Ausnehmung 10 eingedrückt werden.

Zum Erleichtern des Einschiebevorgangs kann der Ventilkörper 5 an einer Stirnseite (vergleiche Fig. 4) eine Einführschräge 17 aufweisen. Das Dichtelement 11 gleitet nun bei einer Drehbewegung des Ventilkörpers 5 relativ zum Gehäuse 4 auf einer Außenmantelfläche des Ventilkörpers 5 und verbindet je nach Drehwinkelstellung des Ventilkörpers 5 einen Ausgang 7 mit zumindest einem Ausgang 8 oder trennt diese voneinander ab. Das Gehäuse 4 des Ventils 1 kann stirnseitig geschlossen oder aber offen sein, wie dies beispielsweise gemäß der Fig. 1 dargestellt ist, wobei in diesem Fall ein Deckel 18 das Gehäuse 4 stirnseitig verschließt und in diesem Deckel 18 entsprechende Eingänge 7 bzw. Ausgänge 8 angeordnet sind. In gleicher Weise ist auch denkbar, dass der Ventilkörper 5 stirnseitig geschlossen ist (vergleiche Fig. 1) oder aber stirnseitig eine Öffnung 19 aufweist (vergleiche die Fig. 2 und 4).

Betrachtet man einen möglichen Einsatzzweck des erfindungsgemäßen Ventils 1 in einem Heiz- und/oder Kühlsystem 2 eines Kraftfahrzeuges 3, kann dem Ventil 1 auch ein Thermostatventil 20 (vergleiche Fig. 9) vorgeschaltet sein, wobei ebenfalls ein das Thermostatventil 20 umgehender Bypasskanal 21 vorgesehen ist, der über das Ventil 1 steuerbar ist. Ein derartiges Thermostatventil 20 dient insbesondere dazu, einen Zugang zu einer Brennkraftmaschine erst bei Erreichen einer bestimmten Temperatur des Kühlmittels zu öffnen, und zwar unabhängig von der Schaltstellung des elektrischen Ventils 1. Insbesondere kann hier eine direkte Verbindung zu einem Zylinderblock realisiert werden, wodurch das Thermostatventil 20 beispielsweise als Split-Cooling-Thermostat dient. Die elektrische Antriebseinrichtung 6 besitzt üblicherweise einen Gleichstrom-Elektromotor, welcher insbesondere über ein Getriebe (insbesondere mit Plastikzahnrädern, einer Schneckenstufe und/oder einer Übersetzung) mit dem Ventilkörper 5 antriebsverbunden ist. Ebenfalls vorgesehen sein kann ein Positionssensor zur Positionsrückmeldung.

Es kann darüber hinaus eine spezielle Kontur zur Kleinstmengensteuerung angeordnet sein.

Mit dem erfindungsgemäßen Ventil 1 kann nicht nur ein einfach und dadurch auch kostengünstig zu montierendes Ventil 1 geschaffen werden, sondern zugleich auch ein leichtgängiges und langfristig zuverlässig funktionierendes.

## Patentansprüche

1. Elektrisch angetriebenes Ventil (1) zur Regelung zumindest eines Volumenstroms in einem Heiz- und/oder Kühlsystem (2) eines Kraftfahrzeuges (3),
- mit einem Gehäuse (4) und einem darin drehbar gelagerten, zylinderförmigen Ventilkörper (5),
- wobei das Gehäuse (4) zumindest einen mantelseitigen Eingang (7) und zumindest einen mantelseitigen Ausgang (8) aufweist,
- wobei der Ventilkörper (5) zumindest eine mantelseitige Öffnung (9) aufweist, über welche drehwinkelabhängig der zumindest eine Eingang (7) mit dem zumindest einen Ausgang (8) verbindbar oder voneinander absperrbar ist,
**dadurch gekennzeichnet,**
- **dass** an einer Innenmantelfläche des Gehäuses (4) eine sich zumindest teilweise um den zumindest einen Eingang (7) und/oder Ausgang (8) herumerstreckende Ausnehmung (10) vorgesehen ist,
- **dass** zumindest ein Dichtelement (11) mit einem Fuß (12) aus einem ersten Material und einem damit gefügten sattelförmigen Dichtgleitkörper (13) aus einem zweiten Material vorgesehen ist,
- **dass** das zumindest eine Dichtelement (11) bei montiertem Ventil (1) mit seinem Fuß (12) in die Ausnehmung (10) eingreift und mit seinem Dichtgleitkörper (13) auf dem Ventilkörper (5) gleitet.

2. Ventil nach Anspruch 1,
**dadurch gekennzeichnet,**
**dass** der Ventilkörper (5) in dem Gehäuse (4) über zumindest ein Gleitlager (15) drehbar gelagert ist.

3. Ventil nach Anspruch 1 oder 2,
**dadurch gekennzeichnet,**
**dass** zumindest ein Eingang (7) und zumindest ein Ausgang (8) ungeregelt sind.

4. Ventil nach einem der vorhergehenden Ansprüche,
**dadurch gekennzeichnet,**
**dass** das erste Material für den Fuß (12) des Dichtelements (11) ein Elastomer, insbesondere Ethylen-Propylen-Dien-Kautschuk (EPDM), hydrierter Acrylnitrilbutadien-Kautschuk (HNBR), Fluorkarbon-Kautschuk (FKM) oder Acrylat-Ethylen-Kautschuk (AEM), aufweist.

5. Ventil nach einem der vorhergehenden Ansprüche,
**dadurch gekennzeichnet,**
**dass** das zweite Material für den Dichtgleitkörper (13) Polytetrafluorethylen (PTFE) aufweist.

6. Ventil nach einem der vorhergehenden Ansprüche,
**dadurch gekennzeichnet,**
**dass** das Ventil (1) zumindest zwei Segmente (16) mit jeweils zumindest einem mantelseitigen Eingang (7) und/oder zumindest einem mantelseitigen Ausgang (8) aufweist, wobei der Ventilkörper (5) je Segment (16) zumindest eine mantelseitige Öffnung (9) aufweist, über welche drehwinkelabhängig der zumindest eine Eingang (7) mit dem zumindest einen Ausgang (8) verbindbar oder voneinander absperrbar ist.

7. Ventil nach einem der vorhergehenden Ansprüche,
**dadurch gekennzeichnet,**
**dass** das zumindest eine Dichtelement (11) als 2K-Kunststoffspritzgussteil ausgebildet ist.

8. Ventil nach einem der Ansprüche 1 bis 7,
**dadurch gekennzeichnet,**
**dass** der Ventilkörper (5) zur Montage axial in das Gehäuse (4) einschiebbar ist.

9. Ventil nach einem der Ansprüche 1 bis 8,
**dadurch gekennzeichnet,**
**dass** das Gehäuse (4) an zumindest einer Stirnseite geschlossen ist.

10. Ventil nach einem der Ansprüche 1 bis 9,
**dadurch gekennzeichnet,**
**dass** der Ventilkörper (5) an zumindest einer Stirnseite geschlossen ist oder eine Öffnung (19) aufweist.

11. Ventil nach einem der Ansprüche 1 bis 10,
**dadurch gekennzeichnet,**
**dass** zumindest ein Eingang (7) und/oder zumindest ein Ausgang (8) eine spezielle Kontur zur Kleinstmengensteuerung aufweist.

12. Ventil nach einem der Ansprüche 1 bis 11,
**dadurch gekennzeichnet,**
**dass** der Ventilkörper (5) an einer Stirnseite eine Einführschräge (17) aufweist.

13. Ventil nach einem der Ansprüche 1 bis 12,
**dadurch gekennzeichnet,**
**dass** Ventil (1) ein diesem vorgeschaltetes Thermostatventil (20) aufweist.

14. Ventil nach Anspruch 13,
**dadurch gekennzeichnet,**
**dass** ein das Thermostatventil (20) umgehender Bypasskanal (21) vorgesehen ist, der über das Ventil (1) steuerbar ist.

15. Ventil nach einem der Ansprüche 1 bis 14,
**dadurch gekennzeichnet,**
**dass** das Dichtelement (11) zur Montage axial in das Gehäuse (4) einschiebbar ist.
*****
